# EUROPEAN PATENT SPECIFICATION

(11) **EP 2 922 279 B1**
(45) Date of publication and mention of the grant of the patent: **18.04.2018**
(21) Application number: 13854785.6
(22) Date of filing: 14.08.2013
(51) Int. Cl.: H04L 29/12, H04W 28/06

(54) **INFORMATION PROCESSING METHOD AND SYSTEM FOR 6LOWPAN EXTENSION FIELD**
INFORMATIONSVERARBEITUNGSVERFAHREN UND -SYSTEM FÜR EIN 6LOWPAN-ERWEITERUNGSFELD
PROCÉDÉ ET SYSTÈME DE TRAITEMENT DE DONNÉES POUR UN CHAMP D'EXTENSION 6LOWPAN

(30) Priority: 14.11.2012 CN 201210457477
(43) Date of publication of application: 23.09.2015
(73) Proprietor: ZTE Corporation, Shenzhen City, Guangdong Province 518057 (CN)
(72) Inventor: YU, Changjian, Shenzhen City Guangdong Province 518057 (CN); SUN, Zhixin, Shenzhen City Guangdong Province 518057 (CN); ZHANG, Zhenwei, Shenzhen City Guangdong Province 518057 (CN); LUO, Bingqing, Shenzhen City Guangdong Province 518057 (CN); ZHANG, Mi, Shenzhen City Guangdong Province 518057 (CN)
(74) Representative: Murgitroyd & Company
(86) International application number: PCT/CN2013/081465
(87) International publication number: WO 2014/075472

(56) References cited:
- WO-A1-2011/119019
- CN-A- 102 196 058
- CN-A- 102 255 972
- SHELBY Z ET AL: "Neighbor Discovery Optimization for Low Power and Lossy Networks (6LoWPAN); draft-ietf-6lowpan-nd-21.txt", NEIGHBOR DISCOVERY OPTIMIZATION FOR LOW POWER AND LOSSY NETWORKS (6LOWPAN); DRAFT-IETF-6LOWPAN-ND-21.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 24 August 2012 (2012-08-24), pages 1-61, XP015086967, [retrieved on 2012-08-24]

## Description

### Technical Field

The present invention relates to the field of Wireless Personal Area Network (WPAN) Communication Technologies based on the IPv6, and specifically, to an information processing method and system for an extended IPv6 over Low-Power Wireless Personal Area Networks (6lowpan) field.

### Background of the Related Art

The wireless personal area network WPAN is a personal area network using the wireless connection. It is used for communication between mobile phones, computers, auxiliary devices and digital assistant devices within a small scope. At present, technologies supporting the wireless personal area network include: Bluetooth, ZigBee, Ultra Wide Band (UWB), IrDA and HomeRF and so on.

The 6lowpan protocol is a protocol established for an interconnection between a wireless sensor network and an IPv6 network, it can be said that it is a simplified version of the IPv6 designed to be applied to a wireless sensor network environment, a potential of low-power operation possessed by the 6LoWPAN makes it very suitable to be applied in devices from handsets to instruments, and the built-in support of the 6LoWPAN for the AES-128 encryption lays a foundation for robust authentication and security.

If data messages within a lowpan field are compressed with a method based on context, a border route within the lowpan field is required to configure and manage the context and context ID. In addition, if there are 2 or multiple border routes within one lowpan field, the lowpan field is called an extended 6lowpan field. Data messages within the extended 6lowpan field are compressed based on the context, therefore, it is required that context information in the 2 or multiple border routes should keep consistent in actual applications. Wherein, Context refers to: in a neighbor discovery protocol of the 6lowpan, newly adding a 6lowpan context option (6CO option). The 6CO option contains prefix information required for 6lowpan header compression, and the prefix information is similar to the significance of a prefix information option in an IPV6 neighbor discovery protocol. Context may be a segment of prefix with an arbitrary length or a 128-bit address, and up to 16 context options can be borne in a Router Advertisement (RA) message.

Wherein, the RA message is periodically sent by routes and border routes in the lowpan to a host, or serves as a response message to a Router Solicitation (RS) message to be sent, and a specific message data format of the RA message may refer to the description in the RFC4861; the RS message is sent by the host in the lowpan field to the routes and border routes, it is used for requesting the RA message, and similarly, a specific message data format of the RS message may refer to the description in the RFC4861; moreover, the Prefix refers to an IPV6 address prefix, and in the ipv6 neighbor discovery protocol, the prefix information option is used for indicating the information such as whether there are other addresses in a segment of link and whether to automatically configure an address and so on.

Generally, the RA message sent by the border route contains context information, each piece of context information is contained in one 6CO option, the border route is required to release the 6CO option and the context information to each node in the lowpan field, and makes all nodes keep synchronous. In the RA message, it is also required to contain an Authoritative Border Router option (ABRO) option besides the 6co option, the ABRO option contains a version number of the released context information and a border route address for releasing the context information, and especially in the extended 6lowpan field, when the context information is released through a multi-hop information release mechanism, and when the RA message is mutually transmitted between the routes, the ABRO option must be contained in the RA message, which is used for identifying whether the received context information is the latest context information.

The information release of a multi-hop context value relies on transmission of the RS and RA information between all the routes, a version number of the context value is acquired through the ABRO option, and any information from arbitrary border routes can be processed with multi-hop mechanism nodes. However, only in a premise of ensuring that the nodes in the extended 6lowpan field have the same context value, can normal sending, forwarding and receiving be correctly performed for the data packets released by multi-hop. Therefore, the border routes in the extended 6lowpan field need a certain mechanism to uniformly manage the context value, so as to guarantee the synchronization between the context values in the border routes.

At present, Neighbor Discovery Optimization for Low Power and Lossy Networks (6lowpan) draft-ietf-61owpan-nd-18 draft proposed by the IETF standard organization in October 24, 2011 has put forward management requirements on the context values released by multi-hop within the extended 6lowpan field, but no specific method is given.

In 2011, a patent documentation, proposed by the Graduate School at Shenzhen, Tsinghua University, with an invention name *METHOD FOR MAINTAINING ADDRESS COMPRESSION CONTROL TABLE IN 6LOWPAN PROTOCOL* and a publication number CN102202106A, proposed a solution of solving the problem of network bandwidth resources waste and energy consumption caused by frequently updating context entries. In the method, options of weight value and efficacy item are added in an address maintenance control table and an address cache table generated by a 6lowpan coordinator, it is to decide whether to add a certain IPV6 prefix into the address cache table by judging a weight of an IPV6 address in the address maintenance control table, and then the updated address cache table is synchronized to the whole network through a method of delamination synchronization.

However, the technical scheme proposed in the patent documentation is completely independent of the neighbor discovery protocol proposed by the IETF organization, therefore, though the technical scheme is proved to have certain optimizing functions in theory, it still lacks a standard base if it wants to get wide implementation and acknowledgment in the industries, meanwhile, in the technical scheme, calculation and judgment of weight values are both represented by constants, and setting of these values seriously affects the addition, deletion and update of the IPV6 address prefix, thus it is apt to cause a case that header compression cannot be performed due to a deficiency of the IPV6 address prefix, which, instead, increases the times of sending the data packets, thereby increasing the network load.

The document, SHELBY Z ET AL: "Neighbor Discovery optimization for low power and lossy networks (6lowPAN); draft-ietf-6lowpan-nd-21.txt", Neighbor Discovery optimization for low power and lossy networks (6lowPAN); draft-ietf-61owpan-nd-21.txt, internet engineering task force, IETF; STANDARDWORKINGDRAFT, INTERNET SOCIETY (ISOC) 4, RUE DES FALAISES CH-1205 GENEVA, SWITZERLAND, 2012-08-24, pages 1-61, XP015086967, has disclosed the related art of the present invention.

### Summary of the Invention

In order to overcome the problem that it is independent of the neighbor discovery protocol proposed by the IETF organization and the consistency of context information release existing in the related art, the object of the embodiments of the present invention is to provide an information processing method and system for an extended 6lowpan field.

In order to achieve the object of the embodiments of the present invention, the embodiments of the present invention are implemented with the following technical scheme.

An information processing method for an extended 6lowpan field comprises:
when a case of context information updating occurs in the extended 6lowpan field, triggering a multi-source synchronization mechanism, to accomplish a synchronization of context information among a plurality of border routers; and
at least one border router distributing the updated context information within the extended 6lowpan field;
wherein, in the step of, when a case of context information updating occurs in the extended 6lowpan field, triggering a multi-source synchronization mechanism, to accomplish a synchronization of context information among a plurality of border routers, a border router adds an update option of 1 bit into a reserved field in a 6CO option, and accomplishes the synchronization of context information among the plurality of border routers according to the update option of 1 bit;
wherein, the multi-source synchronization mechanism comprises the following steps:
   a border router setting the update option in the 6CO option as 1, indicating that the 6CO option enters an update synchronization phase and is not used for responding to a router solicitation RS message or periodically releasing a router advertisement RA message;
   the border router broadcasting an updated CID used for identifying a context information sequence number, an updated context information content and an updated version number content to other border routers within the extended 6lowpan field, and waiting for a response;
   after receiving the 6CO option whose update option is set as 1, the other border router comparing a received updated version number with a local version number, if the updated version number is greater than the local version number, updating a local CID record, storing the updated version number, setting the update option as 0, and replying with response information; and if the updated version number is less than or equal to the local version number, not performing updating operation, discarding the 6CO option, and replying with response information; and
   after receiving the response information sent by all the other border routers within the extended 6lowpan field, the border router sets the update option in the 6CO option as 0, and fills new prefix context information into the 6CO option.

Alternatively, the case of context information updating occurring in the extended 6lowpan field comprises:
when at least one border router acquires an IPv6 address prefix for communication of an external network with a host within the extended 6lowpan field according to a DHCPv6 protocol, and adds the IPv6 address prefix into a context entry and updates a version number content of the context entry;
or, when a valid lifetime of a context value of at least one border router expires and is 0, and it is required to delete the context entry;
or, when a valid lifetime of a context value of at least one border router is changed.

Alternatively, the step of the border router distributing the updated context information within the extended 6lowpan field comprises:
when the border router periodically releases the RA message, in each RA message release period, all the border routers firstly waiting for a synchronization time and then releasing an RA message, wherein, the RA message carries the updated context information.

Alternatively, when a preset maximum periodical release time interval MaxRtrAdvInterval>600s, the synchronization time is set to be equal to 0.05 times a MaxRtrAdvInterval value; and
when the MaxRtrAdvInterval<=600s, the synchronization time is set as 30s.

Alternatively, within the synchronization time, when a multi-source synchronization is not triggered by new context information updating in the border router, after waiting until the synchronization time ends, multi-source synchronization information is sent, and after receiving the response information of all the other border routers, the RA message is released to other forwarding routing nodes LRs and host nodes Hosts within the extended 6lowpan field;
or, when a case of context information updating triggering a multi-source synchronization occurs within the synchronization time, it is to enter a release phase of the RA message after waiting until the multi-source synchronization is accomplished;
or, when a multi-source synchronization is in progress within the synchronization time, it is to enter a release phase of the RA message after waiting until the multi-source synchronization is finished.

Alternatively, the step of the border router distributing the updated context information within the extended 6lowpan field comprises:
when a valid lifetime of a context entry of the host node expires, sending an RS request to the border router, so as to update the context value; and
the border router replying and answering an RA message according to an acquired RS request, wherein, the RA message carries the updated context information.

Alternatively, the information processing method further comprises:
when the forwarding routing node LR sends an RS request to the border router, a border router receiving the RS request directly sending context information of a local exiting version to the host node.

An information processing system for an extended 6lowpan field comprises:
at least one border router, configured to: when a case of context information updating occurs in the extended 6lowpan field, trigger a multi-source synchronization mechanism, to accomplish a synchronization of context information among a plurality of border routers; and distribute the updated context information within the extended 6lowpan field;
wherein, the at least one border router is further configured to add an update option of 1 bit into a reserved field in a 6CO option, and accomplish the synchronization of context information among the plurality of border routers according to the update option of 1 bit;
wherein, the at least one border router is configured to trigger the multi-source synchronization mechanism in a following way:
   setting the update option in the 6CO option as 1, and indicating that the 6CO option enters an update synchronization phase and is not used for responding to a router solicitation RS message or periodically releasing a router advertisement RA message;
   broadcasting an updated CID used for identifying a context information sequence number, an updated context information content and an updated version number content to other border routers within the extended 6lowpan field, and waiting for a response;
   after receiving the response sent by all the other border routers within the extended 6lowpan field, the border router setting the update option in the 6CO option as 0, and filling new prefix context information into the 6CO option;
   wherein the 6CO option whose update option is set as 1 is used by the other border router to compare a received updated version number with a local version number, if the updated version number is greater than the local version number, the other border router update a local CID record, store the updated version number, set the update option as 0, and reply with response information; and if the updated version number is less than or equal to the local version number, not perform updating operation, discard the 6CO option, and reply with response information.

It can be seen from the above technical scheme of the embodiments of the present invention that the embodiments of the present invention have the following beneficial effects.
1. The information processing method for the extended 6lowpan field proposed in the embodiments of the present invention is completely based on the neighbor discovery protocol standard draft proposed by the IETF organization, which has stronger feasibility and extensive applicability.
2. The information processing method for the extended 6lowpan field proposed in the embodiments of the present invention can solve the problem of how to ensure the consistency of released context information in a case that there are a plurality of border routes within the extended 6lowpan field.
3. The information processing method for the extended 6lowpan field based on the multi-source synchronization proposed in the embodiments of the present invention is completely implemented by using the existing mechanism in the standard, it is not independent of the standard, and it can also be modified according to modifications of the standard draft, which has a good usability.

### Brief Description of Drawings

FIG. 1 is a schematic diagram of a flow of an information processing method for an extended 6lowpan field provided in the embodiment of the present invention.
FIG. 2 is a schematic diagram of a network framework of the information processing system for the extended 6lowpan field provided in the embodiment of the present invention.
FIG. 3 is a schematic diagram of a format of the 6CO option provided in the embodiment of the present invention.

The object achievement, function characteristics and outstanding effects of the embodiments of the present invention will be further described in combination with the specific embodiments and accompanying drawings below.

### Preferred Embodiments of the Invention

The technical scheme of the embodiments of the present invention will be further described in detail in combination with the accompanying drawings and specific embodiments below, so that the skilled in the art can better understand the embodiments of the present invention and implement the embodiments of the present invention, but the illustrated embodiments are not a limitation to the embodiments of the present invention.

The embodiments of the present invention are mainly proposed based on the following two core concepts.

One, a multi-border route synchronization mechanism, namely a multi-source synchronization policy, in the extended 6lowpan field is implemented through a multicast mechanism of the RA message, and an update indication bit set in the context entry and a version number in the ABRO option.

Two, based on the neighbor discovery protocol proposed by the IETF standard organization, the method of how the border routes in the extended 6lowpan field uses the multi-source synchronization policy to release the context information is proposed.

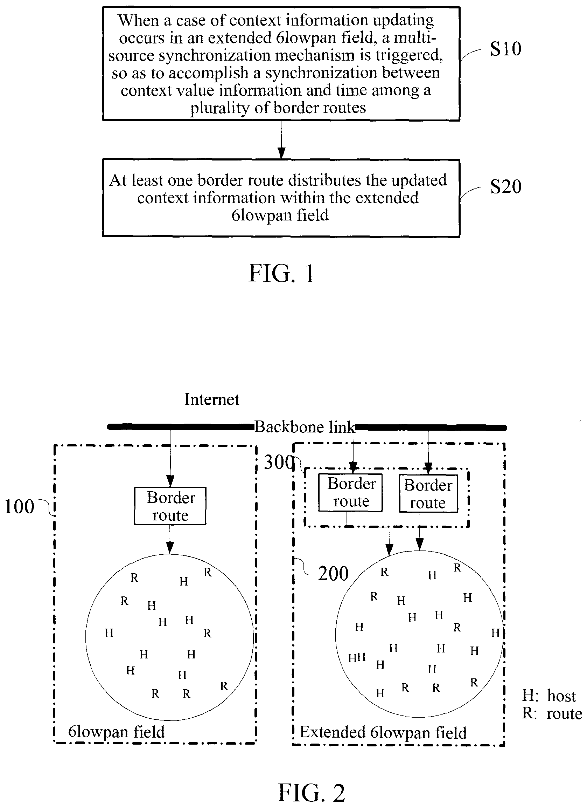

As shown in FIG. 1, an information processing method for an extended 6lowpan field provided in the embodiment of the present invention includes the following steps.

In step S10, when a case of context information updating occurs in an extended 6lowpan field, a multi-source synchronization mechanism is triggered, so as to accomplish a synchronization between context value information and time among a plurality of border routes.

In step S20, at least one border route distributes the updated context information within the extended 6lowpan field.

In the embodiment, the case of context information updating occurring in the extended 6lowpan field includes:
when at least one border route acquires an IPv6 address prefix for communication of an external network with a host within the extended 6lowpan field according to a DHCPv6 protocol, and adds the IPv6 address prefix into a context entry and updates a version number content of the context entry;
or, when a valid lifetime of a context value of at least one border route expires and is 0, and it is required to delete the context entry;
or, when a valid lifetime of a context value of at least one border route is changed.

Specifically, in the step of, when a case of context information updating occurs in the extended 6lowpan field, triggering a multi-source synchronization mechanism, so as to accomplish a synchronization between context value information and time among a plurality of border routes, a border route adds an update option of 1 bit into a reserved field in a 6CO option, and accomplishes the synchronization between context value information and time among the plurality of border routes according to the update option of 1 bit.

Wherein, the multi-source synchronization mechanism includes the following steps.

In step S101, a border route sets the update option in the 6CO option as 1, and indicates that the 6CO option enters an update synchronization phase and is not used for responding to a router solicitation RS message or periodically releasing a router advertisement RA message.

In step S102, the border route broadcasts an updated CID used for identifying a context information sequence number, an updated context information content and an updated version number content to other border routes within the extended 6lowpan field, and waits for a response.

In step S103, after receiving the 6CO option whose update option is set as 1, the other border route compares the received updated version number with a local version number, if the updated version number is greater than the local version number, updates a local CID record, stores the updated version number, sets the update option as 0, and replies with response information; and if the updated version number is less than or equal to the local version number, it does not perform updating operation, discards the 6CO option, and replies with response information.

In step S104, after receiving the response information sent by all the other border routes within the extended 6lowpan field, the border route sets the update option in the 6CO option as 0, and fills new prefix context information into the 6CO option.

As shown in FIG. 2, the 6lowpan network architecture has a 6lowpan field with a single border route, and it also has an extended 6lowpan field with a plurality of border routes.

In the neighbor discovery protocol of the 6lowpan, there has been a flexible mechanism, namely a synchronization mechanism for the context value in routes and hosts within an area 100 in FIG. 2, to guarantee that routing nodes or sensing nodes under one border route have the same context information, so as to guarantee correct compression and decompression of data packets.

However, in order to satisfy the normal working of the nodes and routes within the extended field as mentioned above, it is required to implement an identical context value distribution, namely a synchronization mechanism for the context value within an area 200, in the plurality of border routes.

### Multi-source synchronization policy within extended 6lowpan field

Through the above setting requirements on distributing the context information within the extended 6lowpan field, the embodiment of the present invention proposes a policy of adding a multi-source synchronization based on the context value synchronization of a single border route within the 6lowpan field in the original neighbor discovery protocol, so as to firstly accomplish the synchronization between context value information and time among a plurality of border routes, that is, context information of border routes within an area 300 is firstly synchronized, and then the border routes distribute the context information, so that the context information received by the routes and hosts within the extended lowpan field and the version number are all from the same virtual border route, which solves the problem that the context values distributed by the plurality of border routes are not synchronous within the extended lowpan field.

According to the standard document, initial prefix information in the border route is configured manually or acquired through the DHCPv6 protocol. Therefore, the consistency of the prefix information is firstly guaranteed when 6LBRS are initially configured (if there is no special statement hereinafter, the 6LBRS here all refer to border routes within the same extended 6lowpan field), that is, the consistency of context tables established by the 6LBRS is guaranteed. Wherein, consistency information required to be detected in a prefix information option (PIO) is as stated in the RFC4861 standard document; and consistency information required to be detected in a 6CO includes a context prefix content, a valid lifetime and a context ID. Hereafter, updating of a version number in an ABRO option generated by each 6LBR triggers the multi-source synchronization between the 6LBRs. The updating of the version number is related to the prefix content and valid lifetime in the PIO and the CID and valid lifetime in the 6CO.

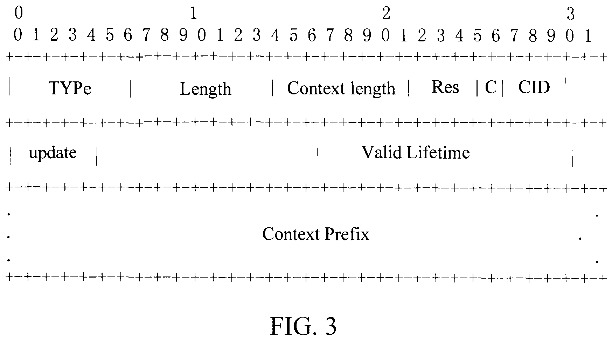

As shown in FIG. 3, it is a basic format of the 6CO option, the border route mainly maintains five major fields of the context information:
a C bit identifies whether to perform compression with the context, when C=0, it indicates that the context can only be used for decompression, and when C=1, it indicates that the context can be used for both compression and decompression;
a CID field used to identify a context sequence number is used for compression and decompression;
a valid lifetime identifies a context valid lifetime, and a unicast RS message is resent to the gateway when a context saved by the sensing node is going to be expired;
a context prefix carries address prefix information; and
update indicates an update status of the entry, the status bit is an indication bit applied to the context entry update proposed in the embodiment of the present invention, and it is added into a location in reserved bytes thereof based on the original neighbor discovery protocol.

There are following kinds of context updating cases that may occur in the 6lowpan:
(1) a certain 6LBR acquires a certain IPv6 address prefix for communication of an external network with a host within the lowpan field according to a DHCPv6 protocol, and adds the address prefix thereof into a context entry, and updates a version number of the context entry, so as to trigger a new round of multi-source synchronization;
(2) a valid lifetime of a certain context value expires and is 0, and it is required to delete the context entry;
(3) a valid lifetime of a certain context value is changed.

All these changes can trigger the multi-source synchronization mechanism, and the synchronization step thereof is described as follows.
1. Firstly, the update option in the 6CO entry is set as 1, and it indicates that the entry enters an update synchronization phase and is not used for responding to the RS message or periodically releasing the RA message.
2. The 6LBR broadcasts the updated CID, the updated context content and the updated version number content (i.e. the 6CO entry, wherein the update indicate is contained) to other 6LBRs, and waits for a response.
3. After receiving the 6CO entry whose update bit is set as 1, the other border route compares sizes of the received version number and the local version number, if the version number is greater than the local version number, updates a CID record, stores the new version number, sets the update bit as 0, and replies with response information; and if the version number is less than or equal to the local version number, it does not perform updating operation, discards the option, but gives out acknowledgment information.
4. After receiving the response information of all the LBRs, the 6LBR sets the update bit in the 6CO entry as 0, and fills new prefix context information into the 6CO entry.

In the embodiment, through setting of the Update indication bit, for the border route initiating the multi-source synchronization, it can prevent the route from releasing the context entry to the routes and nodes within the 6lowpan field in a case that the synchronization between the border route and other border routes is not accomplished; and for the other border routes that are synchronized, it can effectively distinguish whether the update information is derived from the synchronization information between the border routes or derived from other update information.

The synchronization step improves the synchronization requirements given in the standard draft, meanwhile the policy uses a policy of synchronizing the context tables of the host nodes within the single lowpan field for reference, it is completely implemented by using the 6lowpan neighbor discovery protocol specification, and a modification to the protocol is only to add a 1-bit update indication bit in a reserved field in the 6CO option, which has a stronger feasibility.

Specifically, in one embodiment, the step of the border route distributing the updated context information within the extended 6lowpan field includes the following step.

In step S201, when the border route periodically releases the RA message, in each RA message release period, all the border routes firstly wait for a synchronization time and then release an RA message, wherein, the RA message carries the updated context information.

Specifically,
when a preset maximum periodical release time interval MaxRtrAdvInterval>600s, the synchronization time is set to be equal to 0.05 times a MaxRtrAdvInterval value; and when the MaxRtrAdvInterval<=600s, the synchronization time is set as 30s.

Specifically,
within the synchronization time, when a multi-source synchronization is not triggered by new context information updating in the border route, after waiting until the synchronization time ends, multi-source synchronization information is sent, and after receiving the response information of all the other border routes, the RA message is released to other forwarding routing nodes LRs and host nodes Hosts within the extended 6lowpan field;
or, when a case of context information updating triggering a multi-source synchronization occurs within the synchronization time, it enters a release phase of the RA message after waiting until the multi-source synchronization is accomplished;
or, when a multi-source synchronization is in progress within the synchronization time, it enters a release phase of the RA message after waiting until the multi-source synchronization is finished.

Specifically, in another embodiment, the step of the border route distributing the updated context information within the extended 6lowpan field includes the following steps.

In step S202, when a valid lifetime of the context entry of the host node expires, an RS request is sent to the border route, so as to update the context value.

In step S203, the border route replies and answers an RA message according to the acquired RS request, wherein, the RA message carries the updated context information.

More preferably, the following step is also included.

In step S204, when the forwarding routing node LR sends an RS request to the border route, the border route receiving the RS request directly sends context information of the local exiting version to the host node.

### Method for distributing context information within extended 6lowpan field

The above synchronization policy only ensures the consistency of the context entry configured between the 6LBRs with the version number in the ABRO option, however, since the number of border routes is great when the entry is released and an entry synchronization problem exists, a specific method for releasing context values of a plurality of border routes is not given out in the Neighbor Discovery Optimization for Low Power and Lossy Networks (6LoWPAN) draft-ietf-61owpan-nd-18 draft, thus the embodiment of the present invention gives out a method for releasing the context information within the extended 6lowpan field based on the above synchronization policy and the method for releasing the context values within the single lowpan field in the standard draft.

The border route releasing the context information is accomplished by releasing the RA message. In the standard, it is stated that the release of the RA message has two cases:
One, when the border route periodically releases the context information, the RA message is released periodically.
Two, the host node sends the RS request information, and the border route answers the RA message. Therefore, the method for distributing the context information within the extended 6lowpan field is also designed according to these two cases.

### 1) Method for the 6LBRs periodically releasing the context information

Two time intervals, respectively MinRtrAdvInterval and MaxRtrAdvInterval, can be configured when the context information is released within a single 6lowpan field, a default value of the maximum periodical release time interval is 600s, and the minimum periodical release time interval is 0.33*MaxRtrAdvInterval. According to the standard provisions, the present patent proposes a concept of a synchronization time, that is, before periodically releasing the RA message, all the 6LBRs wait for a synchronization time and then enter the periodical sending step. The setting of the synchronization time is beneficial to that the border route can ensure the consistency of the context information between the border routes before periodically releasing the RA message. The length of the synchronization time is set according to the maximum periodical release time interval and minimum periodical release time interval that can be configured, therefore, according to different network conditions and node scales in the 6lowpan field, the configuration of the synchronization time has a certain adjusting space. A reference synchronization time set in the present patent is 0.05* MaxRtrAdvInterval (MaxRtrAdvInterval>600s), if MaxRtrAdvInterval<=600s, a default value thereof is 30s.

Within the synchronization time, the 6LBRs have three statuses.

One, when there is no new update to trigger the synchronization, after waiting until the synchronization time ends, a certain 6LBR is triggered to send synchronization information, and after receiving acknowledgement information of all the 6LBRs, an RA message is released to other LRs and Hosts.

Two, when an update which triggers the synchronization just occurs within the synchronization time, it is to enter a release phase of the RA message after waiting until the synchronization is accomplished.

Three, when the synchronization is just in progress within the synchronization time, it enters a release phase of the RA message after waiting until the synchronization is finished. The method for periodically releasing the context value is completed according to the method for releasing the RA message by multi-hop in the Neighbor Discovery Optimization for Low Power and Lossy Networks (6LoWPAN) draft-ietf-61owpan-nd-18, interface processing between the LR and the LR and between the LR and the host and an RA receiving and forwarding process are similar to the processing process of the 6lowpan field of the single LBR.

Through the above design, all the context value information received by the hosts within the extended 6lowpan field is of a context information version that is synchronized between the 6LBRs, which keeps the consistency of the context information of the hosts within the field, and ensures that the hosts normally compress and decompress 6lowpan data message addresses.

### 2) The hosts sending the RS request to the LBR so as to update the context value since the valid lifetime of the context entry expires.

Since any transformation of the context entry can immediately trigger the entry synchronization between the 6LBRs, a synchronization waiting time before periodically sending the RA message at the same time further guarantees the context entry synchronization between the 6LBRs based on the immediate updating. Therefore, when a certain LR sends an RS request, in order to avoid the case that an RA message cannot be replied immediately which triggers multicast RS sending of a Host, a 6LBR receiving the RS request directly sends the context information of the local existing version to the host. The updating of the context information in the host is accomplished.

The embodiment of the present invention also provides an information processing system for an extended 6lowpan field, which includes:
at least one border route, configured to: when a case of context information updating occurs in the extended 6lowpan field, trigger a multi-source synchronization mechanism, so as to accomplish a synchronization between context value information and time among a plurality of border routes; and distribute the updated context information within the extended 6lowpan field.

The above description is only for the preferred embodiments of the present invention, which does not limit the patent scope of the embodiments of the present invention due to this. Equivalent structures or equivalent flow transformations made with the contents of the descriptions and accompanying drawings of the embodiments of the present invention, or equivalent structures or equivalent flow transformations directly or indirectly applied in other related technical fields, are all included in the patent protection scope of the embodiments of the present invention similarly.

### Industrial Applicability

1. The information processing method for the extended 6lowpan field proposed in the embodiments of the present invention is completely based on the neighbor discovery protocol standard draft proposed by the IETF organization, which has stronger feasibility and extensive applicability.
2. The information processing method for the extended 6lowpan field proposed in the embodiments of the present invention can solve the problem of how to ensure the consistency of released context information in a case that there are a plurality of border routes within the extended 6lowpan field.
3. The information processing method for the extended 6lowpan field based on the multi-source synchronization proposed in the embodiments of the present invention is completely implemented by using the existing mechanism in the standard, it is not independent of the standard, and it can also be modified according to modifications of the standard draft, which has a good usability.

## Claims

1. An information processing method for an extended 6lowpan field comprising:
when a case of context information updating occurs in the extended 6lowpan field, triggering (S10) a multi-source synchronization mechanism, to accomplish a synchronization of context information among a plurality of border routers; and
at least one border router distributing (S20) the updated context information within the extended 6lowpan field;
wherein, in the step of, when a case of context information updating occurs in the extended 6lowpan field, triggering a multi-source synchronization mechanism, to accomplish a synchronization of context information among a plurality of border routers, a border router adds an update option of 1 bit into a reserved field in a 6CO option, and accomplishes the synchronization of context information among the plurality of border routers according to the update option of 1 bit;
wherein, the multi-source synchronization mechanism comprises the following steps:
a border router setting the update option in the 6CO option as 1, and indicating that the 6CO option enters an update synchronization phase and is not used for responding to a router solicitation RS message or periodically releasing a router advertisement RA message;
the border router broadcasting an updated CID used for identifying a context information sequence number, an updated context information content and an updated version number content to other border routers within the extended 6lowpan field, and waiting for a response;
after receiving the 6CO option whose update option is set as 1, the other border routers comparing a received updated version number with a local version number, if the updated version number is greater than the local version number, updating a local CID record, storing the updated version number, setting the update option as 0, and replying with response information; and if the updated version number is less than or equal to the local version number, not performing updating operation, discarding the 6CO option, and replying with response information; and
after receiving the response information sent by all the other border routers within the extended 6lowpan field, the border router setting the update option in the 6CO option as 0, and filling new prefix context information into the 6CO option.

2. The information processing method for an extended 6lowpan field according to claim 1, wherein, the case of context information updating occurring in the extended 6lowpan field comprises:
when at least one border router acquires an IPv6 address prefix for communication of an external network with a host within the extended 6lowpan field according to a DHCPv6 protocol, and adds the IPv6 address prefix into a context entry and updates a version number content of the context entry;
or, when a valid lifetime of a context value of at least one border router expires and is 0, and it is required to delete the context entry;
or, when a valid lifetime of a context value of at least one border router is changed.

3. The information processing method for an extended 6lowpan field according to claim 1, wherein, the step of the border router distributing the updated context information within the extended 6lowpan field comprises:
when the border router periodically releases the RA message, in each RA message release period, all the border routers firstly waiting for a synchronization time and then releasing an RA message, wherein, the RA message carries the updated context information.

4. The information processing method for an extended 6lowpan field according to claim 3, wherein,
when a preset maximum periodical release time interval MaxRtrAdvInterval>600s, the synchronization time is set to be equal to 0.05 times a MaxRtrAdvInterval value; and
when the MaxRtrAdvInterval<=600s, the synchronization time is set as 30s.

5. The information processing method for an extended 6lowpan field according to claim 3, wherein,
within the synchronization time, when a multi-source synchronization is not triggered by new context information updating in the border router, after waiting until the synchronization time ends, multi-source synchronization information is sent, and after receiving the response information of all the other border routers, the RA message is released to other forwarding routing nodes LRs and host nodes Hosts within the extended 6lowpan field;
or, when a case of context information updating triggering a multi-source synchronization occurs within the synchronization time, it is to enter a release phase of the RA message after waiting until the multi-source synchronization is accomplished;
or, when a multi-source synchronization is in progress within the synchronization time, it is to enter a release phase of the RA message after waiting until the multi-source synchronization is finished.

6. The information processing method for an extended 6lowpan field according to claim 1, wherein, the step of the border router distributing the updated context information within the extended 6lowpan field comprises:
when a valid lifetime of a context entry of the host node expires, sending an RS request to the border router, to update the context value; and
the border router replying and answering an RA message according to an acquired RS request, wherein, the RA message carries the updated context information.

7. The information processing method for an extended 6lowpan field according to claim 6, further comprising:
when the forwarding routing node LR sends an RS request to the border router, a border router receiving the RS request directly sending context information of a local exiting version to the host node.

8. An information processing system for an extended 6lowpan field comprising:
at least one border router, configured to: when a case of context information updating occurs in the extended 6lowpan field, trigger a multi-source synchronization mechanism, to accomplish a synchronization of context information among a plurality of border routers; and distribute the updated context information within the extended 6lowpan field;
wherein, the at least one border router is further configured to add an update option of 1 bit into a reserved field in a 6CO option, and accomplish the synchronization of context information among the plurality of border routers according to the update option of 1 bit;
wherein, the at least one border router is configured to trigger the multi-source synchronization mechanism in a following way:
setting the update option in the 6CO option as 1, and indicating that the 6CO option enters an update synchronization phase and is not used for responding to a router solicitation RS message or periodically releasing a router advertisement RA message;
broadcasting an updated CID used for identifying a context information sequence number, an updated context information content and an updated version number content to other border routers within the extended 6lowpan field, and waiting for a response;
after receiving the response sent by all the other border routers within the extended 6lowpan field, the border router setting the update option in the 6CO option as 0, and filling new prefix context information into the 6CO option;
wherein the 6CO option whose update option is set as 1 is used by the other border router to compare a received updated version number with a local version number, if the updated version number is greater than the local version number, the other border router update a local CID record, store the updated version number, set the update option as 0, and reply with response information; and if the updated version number is less than or equal to the local version number, not perform updating operation, discard the 6CO option, and reply with response information.

## Patentansprüche

1. Ein Informationsverarbeitungsverfahren für ein erweitertes 6LoWPAN-Feld, das Folgendes beinhaltet:
wenn ein Fall von Kontextinformationsaktualisierung in dem erweiterten 6LoWPAN-Feld auftritt, Auslösen (S10) eines Mehrquellensynchronisationsmechanismus, um eine Synchronisation von Kontextinformationen unter einer Vielzahl von Grenzroutern zu erreichen; und
Verteilen (S20), durch mindestens einen Grenzrouter, der aktualisierten Kontextinformationen innerhalb des erweiterten 6LoWPAN-Felds;
wobei in dem Schritt, wenn ein Fall von Kontextinformationsaktualisierung in dem erweiterten 6LoWPAN-Feld auftritt, des Auslösens eines
Mehrquellensynchronisationsmechanismus, um eine Synchronisation von Kontextinformationen unter einer Vielzahl von Grenzroutern zu erreichen, ein Grenzrouter eine Aktualisierungsoption von 1 Bit zu einem reservierten Feld in einer 6CO-Option hinzufügt und die Synchronisation von Kontextinformationen unter der Vielzahl von Grenzroutern gemäß der Aktualisierungsoption von 1 Bit erreicht;
wobei der Mehrquellensynchronisationsmechanismus die folgenden Schritte beinhaltet:
Festlegen, durch einen Grenzrouter, der Aktualisierungsoption in der 6CO-Option auf 1, und Anzeigen, dass die 6CO-Option in eine Aktualisierungssynchronisationsphase eintritt und nicht zum Antworten auf eine RS-Antragsmeldung des Routers oder zum periodischen Freigeben einer RA-Ankündigungsmeldung des Routers verwendet wird; Übertragen, durch den Grenzrouter, einer aktualisierten CID, die zum Identifizieren einer Kontextinformationsfolgenummer, eines aktualisierten Kontextinformationsinhalts und eines aktualisierten Versionsnummerninhalts verwendet wird, an andere Grenzrouter innerhalb des erweiterten 6LoWPAN-Felds, und Warten auf eine Antwort; nach dem Empfangen der 6CO-Option, deren Aktualisierungsoption auf 1 festgelegt ist, Vergleichen, durch die anderen Grenzrouter, einer empfangenen aktualisierten Versionsnummer mit einer lokalen Versionsnummer, wenn die aktualisierte Versionsnummer größer als die lokale Versionsnummer ist, Aktualisieren einer lokalen CID-Aufzeichnung, Speichern der aktualisierten Versionsnummer, Festlegen der Aktualisierungsoption auf 0 und Antworten mit Antwortinformationen; und wenn die aktualisierte Versionsnummer kleiner oder gleich der lokalen Versionsnummer ist, ein Durchführen einer Aktualisierungsoperation, Verwerfen der 6CO-Option und Antworten mit Antwortinformationen; und
nach dem Empfangen der Antwortinformationen, die von allen anderen Grenzroutern innerhalb des erweiterten 6LoWPAN-Felds gesendet wurden, Festlegen, durch den Grenzrouter, der Aktualisierungsoption in der 6CO-Option auf 0 und Füllen neuer Präfixkontextinformationen in die 6CO-Option.

2. Informationsverarbeitungsverfahren für ein erweitertes 6LoWPAN-Feld gemäß Anspruch 1, wobei der Fall, bei dem die Kontextinformationsaktualisierung in dem erweiterten 6LoWPAN-Feld auftritt, Folgendes beinhaltet:
wenn mindestens ein Grenzrouter ein IPv6-Adresspräfix für die Kommunikation eines externen Netzwerks mit einem Host innerhalb des erweiterten 6LoWPAN-Felds gemäß einem DHCPv6-Protokoll erwirbt und das IPv6-Adresspräfix zu einem Kontexteintrag hinzufügt und einen Versionsnummerninhalt des Kontexteintrags aktualisiert;
oder wenn eine gültige Lebensdauer eines Kontextwerts von mindestens einem Grenzrouter abläuft und 0 ist, und es erforderlich ist, den Kontexteintrag zu löschen; oder wenn eine gültige Lebensdauer eines Kontextwerts von mindestens einem Grenzrouter geändert wird.

3. Informationsverarbeitungsverfahren für ein erweitertes 6LoWPAN-Feld gemäß Anspruch 1, wobei der Schritt, bei dem der Grenzrouter die aktualisierten Kontextinformationen innerhalb des erweiterten 6LoWPAN-Felds verteilt, Folgendes beinhaltet:
wenn der Grenzrouter die RA-Meldung periodisch freigibt, in jeder RA-Meldungsfreigabeperiode, zuerst Warten, durch alle Grenzrouter, auf eine Synchronisationszeit und dann Freigeben einer RA-Meldung, wobei die RA-Meldung die aktualisierten Kontextinformationen trägt.

4. Informationsverarbeitungsverfahren für ein erweitertes 6LoWPAN-Feld gemäß Anspruch 3, wobei,
wenn ein voreingestelltes maximales periodisches Freigabezeitintervall MaxRtrAdvInterval > 600 s ist, die Synchronisationszeit auf das 0,05-fache eines MaxRtrAdvInterval-Wertes festgelegt wird; und
wenn MaxRtrAdvInterval <= 600 s ist, die Synchronisationszeit auf 30 s festgelegt wird.

5. Informationsverarbeitungsverfahren für ein erweitertes 6LoWPAN-Feld gemäß Anspruch 3, wobei
innerhalb der Synchronisationszeit, wenn eine Mehrquellensynchronisation nicht durch Aktualisierung neuer Kontextinformationen im Grenzrouter ausgelöst wird, nach dem Warten, bis die Synchronisationszeit abgeschlossen ist, Mehrquellensynchronisationsinformationen gesendet werden und nach dem Empfangen der Antwortinformationen von allen anderen Grenzroutern die RA-Meldung an andere Weiterleitungsroutingknoten, LRs, und Hostknoten, Hosts, innerhalb des erweiterten 6LoWPAN-Felds freigegeben wird;
oder, wenn ein Fall von Kontextinformationsaktualisierung, die eine Mehrquellensynchronisation auslöst, innerhalb der Synchronisationszeit auftritt, in eine Freigabephase der RA-Meldung einzutreten ist, nach dem Warten, bis die Mehrfachquellensynchronisation erreicht ist;
oder, wenn eine Mehrquellensynchronisation innerhalb der Synchronisationszeit ausgeführt wird, in eine Freigabephase der RA-Meldung einzutreten ist, nach dem Warten, bis die Mehrquellensynchronisation beendet ist.

6. Informationsverarbeitungsverfahren für ein erweitertes 6LoWPAN-Feld gemäß Anspruch 1, wobei der Schritt, bei dem der Grenzrouter die aktualisierten Kontextinformationen innerhalb des erweiterten 6LoWPAN-Felds verteilt, Folgendes beinhaltet:
wenn eine gültige Lebensdauer eines Kontexteintrags des Hostknotens abläuft, Senden einer RS-Anfrage an den Grenzrouter, um den Kontextwert zu aktualisieren; und
Antworten auf und Beantworten, durch den Grenzrouter, einer RA-Meldung gemäß einer erworbenen RS-Anfrage, wobei die RA-Meldung die aktualisierten Kontextinformationen trägt.

7. Informationsverarbeitungsverfahren für ein erweitertes 6LoWPAN-Feld gemäß Anspruch 6, das ferner Folgendes beinhaltet:
wenn der Weiterleitungsroutingknoten LR eine RS-Anfrage an den Grenzrouter sendet, direktes Senden, durch einen Grenzrouter, der die RS-Anfrage empfängt, von Kontextinformationen einer lokalen ausscheidenden Version an den Hostknoten.

8. Informationsverarbeitungssystem für ein erweitertes 6LoWPAN-Feld, das Folgendes beinhaltet:
mindestens einen Grenzrouter, der für Folgendes konfiguriert ist: wenn ein Fall von Kontextinformationsaktualisierung in dem erweiterten 6LoWPAN-Feld auftritt, Auslösen eines Mehrquellensynchronisationsmechanismus, um eine Synchronisation von Kontextinformationen unter einer Vielzahl von Grenzroutern zu erreichen; und Verteilen der aktualisierten Kontextinformationen innerhalb des erweiterten 6LoWPAN-Felds;
wobei der mindestens eine Grenzrouter ferner konfiguriert ist, um eine Aktualisierungsoption von 1 Bit zu einem reservierten Feld in einer 6CO-Option hinzuzufügen und die Synchronisation von Kontextinformationen unter der Vielzahl von Grenzroutern gemäß der Aktualisierungsoption von 1 Bit zu erreichen;
wobei der mindestens eine Grenzrouter konfiguriert ist, um den Mehrquellensynchronisationsmechanismus auf eine folgende Weise auszulösen:
Festlegen der Aktualisierungsoption in der 6CO-Option auf 1, und Anzeigen, dass die 6CO-Option in eine Aktualisierungssynchronisationsphase eintritt und nicht zum Antworten auf eine RS-Antragsmeldung des Routers oder zum periodischen Freigeben einer RA-Ankündigungsmeldung des Routers verwendet wird;
Übertragen einer aktualisierten CID, die zum Identifizieren einer Kontextinformationsfolgenummer, eines aktualisierten Kontextinformationsinhalts und eines aktualisierten Versionsnummerninhalts verwendet wird, an andere Grenzrouter innerhalb des erweiterten 6LoWPAN-Felds, und Warten auf eine Antwort;
nach dem Empfangen der Antwort, die von allen anderen Grenzroutern innerhalb des erweiterten 6LoWPAN-Felds gesendet wurde, Festlegen, durch den Grenzrouter, der Aktualisierungsoption in der 6CO-Option auf 0 und Füllen neuer Präfixkontextinformationen in die 6CO-Option;
wobei die 6CO-Option, deren Aktualisierungsoption auf 1 festgelegt ist, von dem anderen Grenzrouter verwendet wird, um eine empfangene aktualisierte Versionsnummer mit einer lokalen Versionsnummer zu vergleichen, wenn die aktualisierte Versionsnummer größer als die lokale Versionsnummer ist, wobei der andere Grenzrouter eine lokale CID-Aufzeichnung aktualisiert, die aktualisierte Versionsnummer speichert, die Aktualisierungsoption auf 0 festlegt und mit Antwortinformationen antwortet; und wenn die aktualisierte Versionsnummer kleiner oder gleich der lokalen Versionsnummer ist, keine Aktualisierungsoperation durchführt, die 6CO-Option verwirft und mit Antwortinformationen antwortet.

## Revendications

1. Un procédé de traitement d'informations pour un champ 6lowpan étendu comprenant :
quand un cas de mise à jour d'informations de contexte se produit dans le champ 6lowpan étendu, le déclenchement (S10) d'un mécanisme de synchronisation multisource, afin d'accomplir une synchronisation d'informations de contexte parmi une pluralité de routeurs de bordure de zone ; et
la distribution par au moins un routeur de bordure de zone (S20) des informations de contexte mises à jour à l'intérieur du champ 6lowpan étendu ;
dans lequel, à l'étape consistant, quand un cas de mise à jour d'informations de contexte se produit dans le champ 6lowpan étendu, à déclencher d'un mécanisme de synchronisation multisource, afin d'accomplir une synchronisation d'informations de contexte parmi une pluralité de routeurs de bordure de zone, un routeur de bordure de zone ajoute une option de mise à jour d'1 bit dans un champ réservé dans une option 6CO, et accomplit la synchronisation d'informations de contexte parmi la pluralité de routeurs de bordure de zone selon l'option de mise à jour d'1 bit ;
dans lequel le mécanisme de synchronisation multisource comprend les étapes suivantes :
le réglage par un routeur de bordure de zone de l'option de mise à jour dans l'option 6CO sur 1, et l'indication selon laquelle l'option 6CO entre dans une phase de synchronisation de mise à jour et n'est pas utilisée pour répondre à un message de sollicitation de routeur RS ou émettre périodiquement un message d'annonce RA ; la diffusion par le routeur de bordure de zone d'un CID mis à jour utilisé pour identifier un numéro de séquence d'informations de contexte, un contenu d'informations de contexte mises à jour et un contenu de numéro de version mise à jour vers d'autres routeurs de bordure de zone à l'intérieur du champ 6lowpan étendu, et l'attente d'une réponse ;
après la réception de l'option 6CO dont l'option de mise à jour est réglée sur 1, la comparaison par les autres routeurs de bordure de zone d'un numéro de version mise à jour reçue avec un numéro de version locale, si le numéro de version mise à jour est supérieur au numéro de version locale, la mise à jour d'un enregistrement CID local, le stockage du numéro de version mise à jour, le réglage de l'option de mise à jour sur 0, et la réponse avec des informations de réponse ; et si le numéro de version mise à jour est inférieur ou égal au numéro de version locale, la non-réalisation d'une opération de mise à jour, la suppression de l'option 6CO, et la réponse avec des informations de réponse ; et
après la réception des informations de réponse envoyées par tous les autres routeurs de bordure de zone à l'intérieur du champ 6lowpan étendu, le réglage par le routeur de bordure de zone de l'option de mise à jour dans l'option 6CO sur 0, et l'insertion de nouvelles informations de contexte de préfixe dans l'option 6CO.

2. Le procédé de traitement d'informations pour un champ 6lowpan étendu selon la revendication 1, dans lequel l'occurrence du cas de mise à jour d'informations de contexte dans le champ 6lowpan étendu comprend :
quand au moins un routeur de bordure de zone acquiert un préfixe d'adresse IPv6 pour une communication d'un réseau externe avec un hôte à l'intérieur du champ 6lowpan étendu selon un protocole DHCPv6, et ajoute le préfixe d'adresse IPv6 dans une entrée de contexte et met à jour un contenu de numéro de version de l'entrée de contexte ;
ou, quand une durée d'existence valide d'une valeur de contexte d'au moins un routeur de bordure de zone expire et est 0, et qu'il est nécessaire d'effacer l'entrée de contexte ; ou, quand une durée d'existence valide d'une valeur de contexte d'au moins un routeur de bordure de zone est modifiée.

3. Le procédé de traitement d'informations pour un champ 6lowpan étendu selon la revendication 1, dans lequel l'étape de distribution par le routeur de bordure de zone d'informations de contexte mises à jour à l'intérieur du champ 6lowpan étendu comprend :
quand le routeur de bordure de zone émet périodiquement le message RA, dans chaque période d'émission de message RA, d'abord l'attente par tous les routeurs de bordure de zone d'un temps de synchronisation et ensuite l'émission d'un message RA, dans lequel le message RA transporte les informations de contexte mises à jour.

4. Le procédé de traitement d'informations pour un champ 6lowpan étendu selon la revendication 3, dans lequel,
quand un intervalle de temps d'émission périodique maximum réglé au préalable MaxRtrAdvlnterval>600s, le temps de synchronisation est réglé pour être égal à 0,05 fois une valeur MaxRtrAdvInterval ; et
quand le MaxRtrAdvlnterval<=600s, le temps de synchronisation est réglé sur 30 s.

5. Le procédé de traitement d'informations pour un champ 6lowpan étendu selon la revendication 3, dans lequel,
à l'intérieur du temps de synchronisation, quand une synchronisation multisource n'est pas déclenchée par une nouvelle mise à jour d'informations de contexte dans le routeur de bordure de zone, après l'attente jusqu'à ce que le temps de synchronisation se termine, les informations de synchronisation multisource sont envoyées, et après la réception des informations de réponse de tous les autres routeurs de bordure de zone, le message RA est émis vers d'autres noeuds de routage d'acheminement, LR, et noeuds hôtes, Hôtes, à l'intérieur du champ 6lowpan étendu ;
ou, quand un cas de mise à jour d'informations de contexte déclenchant une synchronisation multisource se produit à l'intérieur du temps de synchronisation, c'est pour entrer dans une phase d'émission du message RA après une attente jusqu'à ce la synchronisation multisource soit accomplie ;
ou, quand une synchronisation multisource est en cours à l'intérieur du temps de synchronisation, c'est pour entrer dans une phase d'émission du message RA après une attente jusqu'à ce que la synchronisation multisource soit terminée.

6. Le procédé de traitement d'informations pour un champ 6lowpan étendu selon la revendication 1, dans lequel l'étape de distribution par le routeur de bordure de zone des informations de contexte mises à jour à l'intérieur du champ 6lowpan étendu comprend :
quand une durée d'existence valide d'une entrée de contexte du noeud hôte expire, l'envoi d'une requête RS au routeur de bordure de zone, afin de mettre à jour la valeur de contexte ; et
le fait de donner une réponse et la réponse par un routeur de bordure de zone à un message RA selon une requête RS acquise, dans lequel le message RA transporte les informations de contexte mises à jour.

7. Le procédé de traitement d'informations pour un champ 6lowpan étendu selon la revendication 6, comprenant en sus :
quand le noeud de routage d'acheminement LR envoie une requête RS au routeur de bordure de zone, l'envoi direct par un routeur de bordure de zone recevant la requête RS d'informations de contexte d'une version de sortie locale au noeud hôte.

8. Un système de traitement d'informations pour un champ 6lowpan étendu comprenant :
au moins un routeur de bordure de zone, configuré afin de : quand un cas de mise à jour d'informations de contexte se produit dans le champ 6lowpan étendu, déclencher un mécanisme de synchronisation multisource, afin d'accomplir une synchronisation d'informations de contexte parmi une pluralité de routeurs de bordure de zone ; et
distribuer les informations de contexte mises à jour à l'intérieur du champ 6lowpan étendu ;
dans lequel l'au moins un routeur de bordure de zone est configuré en sus pour ajouter une option de mise à jour d'1 bit dans un champ réservé dans une option 6CO, et
accomplir la synchronisation d'informations de contexte parmi la pluralité de routeurs de bordure de zone selon l'option de mise à jour d'1 bit ;
dans lequel l'au moins un routeur de bordure de zone est configuré pour déclencher le mécanisme de synchronisation multisource d'une façon suivante :
le réglage de l'option de mise à jour dans l'option 6CO sur 1, et l'indication selon laquelle l'option 6CO entre dans une phase de synchronisation de mise à jour et n'est pas utilisée pour répondre à un message de sollicitation de routeur RS ou émettre périodiquement un message d'annonce RA ;
la diffusion d'un CID mis à jour utilisé pour identifier un numéro de séquence d'informations de contexte, un contenu d'informations de contexte mises à jour et un contenu de numéro de version mise à jour vers d'autres routeurs de bordure de zone à l'intérieur du champ 6lowpan étendu, et l'attente d'une réponse ;
après la réception de la réponse envoyée par tous les autres routeurs de bordure de zone à l'intérieur du champ 6lowpan étendu, le réglage par le routeur de bordure de zone de l'option de mise à jour dans l'option 6CO sur 0, et l'insertion de nouvelles informations de contexte de préfixe dans l'option 6CO ;
dans lequel l'option 6CO dont l'option de mise à jour est réglée sur 1 est utilisée par l'autre routeur de bordure de zone pour comparer un numéro de version mise à jour reçue avec un numéro de version locale, si le numéro de version mise à jour est supérieur au numéro de version locale, l'autre routeur de bordure de zone met à jour un enregistrement de CID local, stocke le numéro de version mise à jour, règle l'option de mise à jour sur 0, et répond avec des informations de réponse ; et si le numéro de version mise à jour est inférieur ou égal au numéro de version locale, ne réalise pas d'opération de mise à jour, supprime l'option 6CO, et répond avec des informations de réponse.
